Europäisches Patentamt

European Patent Office

Office européen des brevets

(19)

(11) Publication number: **0 072 156**
**B1**

(12) **EUROPEAN PATENT SPECIFICATION**

(45) Date of publication of patent specification: **28.11.84**

(21) Application number: **82304023.3**

(22) Date of filing: **30.07.82**

(51) Int. Cl.³: **A 01 N 47/38** // (A01N47/38, 43/84, 43/54)

(54) Fungicidal composition containing prochloraz.

(30) Priority: **31.07.81 GB 8123520**
**31.07.81 GB 8123521**
**31.07.81 GB 8123522**

(43) Date of publication of application:
**16.02.83 Bulletin 83/07**

(45) Publication of the grant of the patent:
**28.11.84 Bulletin 84/48**

(84) Designated Contracting States:
**AT BE CH DE FR GB IT LI LU NL SE**

(56) References cited:
**FR-A-2 374 315**

**C.R. WORTHING: "The pesticide manual", 6th
Edition, 1979, pages 390, 436, 534, B.C.P.C.
Publications, Croydon (GB)**

(73) Proprietor: **FBC LIMITED**
**Hauxton**
**Cambridge CB2 5HU (GB)**

(72) Inventor: **Barnes, Geoffrey**
**90 Cambridge Road**
**Great Shelford Cambridge CB2 5JS (GB)**

(74) Representative: **Waldman, Ralph David et al**
**Industrial Property Department FBC Limited
Chesterford Park Research Station
Saffron Walden, Essex CB10 1XL (GB)**

Courier Press, Leamington Spa, England.

## Description

This invention relates to compositions with useful fungicidal properties.

The present invention provides a fungicidal composition comprising

a) prochloraz and

b) a fungicide selected from
(i) tridemorph
(ii) fenpropimorph

and (iii) nuarimol.

Prochloraz is a known fungicide and is the approved common name for 1-[N-propyl-N-2-(2,4,6-trichlorophenoxy) ethylcarbamoyl]-imidazole, and that name is used in the specification to also include salts and metal complexes of this compound. Tridemorph is the common name for 2,6-dimethyl-4-tridecylmorpholine; fenpropimorph is the common name for 4-{3-[4-(1,1-dimethylethyl)-phenyl]-2-methylpropyl}2,6-(cis)-dimethylmorpholine; and nuarimol is the common name for 2-chloro-4'-fluoro-$\alpha$-(pyrimidin-5-yl) benzhydryl alcohol.

We have found that the compositions of the invention have advantageous properties over individual components and that synergism is often demonstrated, and yield of crop may be increased.

The ratios of the prochloraz to component (b) vary over a wide range but are usually in the range 5:1 to 1:5 eg 3:1 to 1:3. These ratios are based on the weights of the free bases.

In addition other pesticides may be employed in conjunction with the active ingredients described above providing they do not adversely affect the interaction between the fungicidal components. For example it is sometimes useful to include additional fungicides which extend the range of activity in order to control a wider spectrum of fungi.

The compositions of the invention are active against a wide range of fungi, e.g. powdery mildew (*Erysiphe graminis*) on cereal crops such as wheat, barley, oats and rye and other foliar diseases such as glume blotch (*Septoria nodorum*), leaf blotch (*Rhynchosporium secalis*), eyespot (*Pseudocercosporella herpotrichoides*) and rust (e.g. *Puccinia graminis*). Certain compositions of the present invention can be used to control seed borne organisms such as bunt (*Tilletia caries*) on wheat, loose smut (*Ustilago nuda* and *Ustilago hordei*) on barley and oats, leaf spot (*Pyrenophora avenae*) on oats and leaf stripe (*Pyrenophora graminis*) on barley. The compositions can also be applied to rice for control of rice blast (*Pyricularia oryzae*), to horticultural crops such as apple trees for the control of apple scab (*Venturia inaequalis*), roses for the control of powdery mildew (*Sphaerotheca pannosa*), cucurbits for the control of *Botrytis cinerea*, turf for the control of dollar spot (*Sclerotinia homeocarpa*) and to stored produce for the control of storage rot organisms of citrus fruit, potatoes, sugar beet, apples, pears etc, (e.g. *Penicillium spp. Aspergillus spp.* and *Botrytis spp.*.

Metal complexes of prochloraz are described in British Patent 1,567,521 and a particularly preferred complex is that formed with manganous chloride in which the molar ratio of prochloraz to manganese is 4:1. However, generally, the prochloraz is present as the free base. The compositions of the invention may be employed in many forms and are often most conveniently prepared in aqueous form immediately prior to use. One method of preparing such a composition is referred to as "tank mixing" in which the fungicidal ingredients in their commercially available form are mixed together by the user in a quantity of water.

In addition to tank mixing immediately prior to use the compositions containing prochloraz and component (b) may be formulated into a more concentrated primary composition which is diluted with water or other diluent before use. Such compositions may comprise a surface active agent in addition to the active ingredients and typical examples are a dispersion in an aqueous or non-aqueous vehicle, an emulsifiable concentrate, a dispersible powder or a dusting powder. As a concentrated primary composition the concentration of active ingredients can vary widely and can be for example from 5 to 95 per cent by weight of the composition. The primary composition is diluted to give compositions for application to a growing crop in which the amount of active ingredient applied to the crop is as specified below.

An emulsifiable concentrate, also known as a "miscible liquid", comprises a solution of the active ingredients in a non-aqueous solvent in association with one or more emulsifying agents. An emulsion is formed when the emulsifiable concentrate is mixed with water.

A dispersible powder comprises the active ingredients in finely divided form in association with one or more dispersion agents so that a stable aqueous dispersion of the active ingredients is formed on mixing the powder with water. A finely divided inert solid diluent such as kaolin or diatomaceous earth sold under the Registered Trade Mark CELITE is generally incorporated in the dispersible powder.

A dusting powder comprises the active ingredients intimately mixed with a solid pulverant diluent, for example kaolin.

The concentration of the active ingredients (when used as the sole active components) in a composition for direct application to the crop by conventional ground methods is preferably within the range of 0,001 to 10 per cent by weight of the composition, especially 0.005 to 5 per cent by weight, but more concentrated compositions containing up to 40 per cent may be desirable in the case of aerial sprays.

2

As a further aspect, the invention includes a method for controlling a phytopathogenic fungus which comprises applying to seeds, plants and other vegetative material or their habitat components (a) and (b) either together or in sequence. Preferably they are applied as a composition of the invention. The composition can be applied directly at the time of drilling of seeds so that the active composition controls the growth of fungi which attack the seed. A suitable application rate is within the range of from 0,025 to 10 kilogram per hectare, more preferably from 0.04 to 5.0 kilogram per hectare.

Alternatively the composition of the invention can be applied directly to plants by, for example, spraying or dusting either at the time which the fungus has begun to appear on the plant or before the appearance of fungus, as a protective measure. In both cases the preferred mode of application is by foliar spray. It is generally important to obtain good control of fungi in the early stages of plant growth as this is the time when the plant can be most severely damaged. For cereal crops such as wheat, barley and oats it is often desirable to spray the plant at or before growth stage 6 (Feeke's scale), although additional treatments when the plant is more mature can augment resistance to the growth or spread of fungi. It may also sometimes be useful to treat the roots of a plant before or during planting, for example, by dipping the roots in a suitable liquid or solid composition. When the composition of the invention is applied directly to the plant a suitable rate of application is from 0.05 to 5 kilograms per hectare, preferably from 0.25 to 1.5 kilograms per hectare.

In a further method of the invention the composition of the invention can be applied to the seed in order to combat seed-borne diseases. This method is of particular use in the treatment of cereal grain against attack by, for example, leaf spot of oats, leaf stripe of barley, loose smut of barley, loose smut of oats, and bunt of wheat. If cereal grain is to be stored in a store room or container it is sometimes convenient to treat the store room or container with a composition according to the invention instead of, or in addition to, treatment of the cereal grain itself. A suitable rate of application for a seed dressing is from 0.02 to 1.0 g per kilgram, such as for example from 0.05 to 0.25 g per kilogram.

A particular method of the invention is one for controlling foliar diseases on a cereal crop, such as for example wheat, barley, oats or rye which comprises applying a composition of the invention to the crop. Preferably the mode of application is by foliar spray of the growing crop.

The invention is illustrated in the following Examples which describe *in vitro* experiments in which a synergistic effect was observed.

Example 1

Aqueous suspensions prepared from prochloraz and a commercially available formulation containing tridemorph were prepared and were incorporated into molten malt extract agar in amounts to give the required concentration of active ingredient in the agar. The molten agar was then poured into 9cm. Petri dishes and allowed to set. The agar in each dish was inoculated with two plugs taken from an agar culture of *Botrytis cinerea* and the dishes were incubated at 20°C for seven days. The colony diameters were then measured and the amount of growth expressed as a percentage of the growth observed with a control calculated. Each experiment was replicated five times and a mean value of the observed growth as a percentage of control is shown in Table 1

TABLE 1

| Concentration of Prochloraz (ppm) | Concentration of tridemorph (ppn) | Observed growth as percentage of control | Expected growth as percentage of control |
|---|---|---|---|
| 1.0 | 0 | 100 | |
| 0 | 1.25 | 99 | |
| 1.0 | 1.25 | 72 | 99 |

Since the prochloraz alone had no effect, the expected growth after treatment by the mixture would be expected to be the same as with the tridemorph alone. Therefore a figure less than this indicates synergism.

Examples 2 & 3

Example 1 was repeated replacing the tridemorph with in turn fenpropimorph and nuarimol. Synergism was demonstrated as shown in Tables II & III

3

**0072156**

TABLE II

| Concentration of Prochloraz (ppm) | Concentration of fenpropimorph (ppm) | Observed growth as percentage of control | Expected growth as percentage of control |
|---|---|---|---|
| 1 | 0 | 100 | |
| 0 | 1 | 48 | |
| 1 | 1 | 15 | 48 |

TABLE III

| Concentration of prochloraz (ppm) | Concentration of nuarimol (ppm) | Observed growth as percentage of control | Expected growth as percentage of control |
|---|---|---|---|
| 1 | 0 | 100 | |
| 0 | 2.5 | 80 | |
| 1 | 2.5 | 49 | 80 |

**Claims**

1. A fungicidal composition comprising
a) prochloraz, its salts or complexes with metal salts and
b) a fungicide selected from
   (i) tridemorph
   (ii) fenpropimorph
and (iii) nuarimol.

2. A composition according to claim 1 wherein the ratio of the prochloraz to component (b) is the range 5:1 to 1:5 based on the weight of the free bases.

3. A method for controlling a phytopathogenic fungus which comprises applying to seeds, plants and other vegetative material or their habitat.
a) prochloraz, its salts or complexes with metal salts and
b) a fungicide selected from
   (i) tridemorph
   (ii) fenpropimorph
and (iii) nuarimol.
components (a) and (b) being applied either together or in sequence.

**Revendications**

1. Composition fongicide comprenant
a) du prochloraz, ses sels ou ses complexes avec des sels métalliques et
b) d'un fongicide choisi entre
   (i) le tridémorphe
   (ii) le fenpropimorphe
et (iii) le nuarimol.

2. Composition suivant la revendication 1, dans laquelle le rapport du prochloraz au composant (b) est situé dans l'intervalle de 5:1 à 1:5, sur base du poids des bases libres.

4

3. Procédé pour combattre un champignon phytopathogène qui comprend l'application sur les semences, les plantes et autres parties végétatives ou sur leur habitat
a) de prochloraz, de ses sels ou de ses complexes avec des sels métalliques et
b) d'un fongicide choisi entre
(i) le tridémorphe
(ii) le fenpropimorphe
et (iii) le nuarimol
les composants (a) et (b) étant appliqués ensemble ou en succession.

**Patentansprüche**

1. Fungizide Zusammensetzung, die
a) Prochloraz, dessen Salz oder Komplexe mit Metallsalzen und
b) ein Fungizid ausgewählt aus
(i) Tridemorph
(ii) Fenpropimorph und
(iii) Nuarimol
aufweist.

2. Zusammensetzung gemäß Anspruch 1, worin das Verhältnis von Prochloraz zur Komponente (b) im Bereich 5:1 bis 1:5, bezogen auf die Masse der freien Basen, liegt.

3. Verfahren zum Bekämpfen eines phytopathogenen Pilzes, welches das Aufbringen von
a) Prochloraz, dessen Salzen oder Komplexen mit Metallsalzen und
b) eines Fungizids ausgewählt aus
(i) Tridemorph
(ii) Fenpropimorph und
(iii) Nuarimol
auf Samen, Pflanzen und anderes Pflanzenmaterial oder deren Lebensraum umfaßt, wobei die Komponenten (a) und (b) entweder miteinander oder der Reihe nach aufgebracht werden.